# EUROPÄISCHE PATENTSCHRIFT

(11) **EP 2 071 535 B1**
(45) Veröffentlichungstag und Bekanntmachung des Hinweises auf die Patenterteilung: **11.07.2012**
(21) Anmeldenummer: 08165143.2
(22) Anmeldetag: 08.05.2001
(51) Int. Cl.: F21S 9/00

(54) **Transportable Flugbefeuerung**
Transportable aviation light
Balisage lumineux portatif pour aéronefs

(30) Priorität: 09.05.2000 DE 20008289 U
(43) Veröffentlichungstag der Anmeldung: 17.06.2009
(62) Teilanmeldung aus: 05109416.7
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- WO-A-97/29320
- DE-A1- 19 536 314
- DE-U1- 20 008 289
- GB-A- 1 383 653
- US-A- 4 620 190
- PATENT ABSTRACTS OF JAPAN Bd. 1999, Nr. 12, 29. Oktober 1999 (1999-10-29) & JP 11 182409 A (NKK CORP), 6. Juli 1999 (1999-07-06)
- "Das neue redundant arbeitende Gefahrfeuer wurde weiterentwickelt" WINDKRAFT-JOURNAL, VERLAG NATUERLICHE ENERGIE GMBH, DE, Bd. 19, Nr. 4, 1. Januar 1999 (1999-01-01), Seiten 20-21, XP008091706 ISSN: 0941-3898

## Beschreibung

Die vorliegende Erfindung betrifft eine transportable Flugbefeuerungseinrichtung eines Bauwerkes großer Höhe, vorzugsweise eines Turmes einer Windenergieanlage, mit wenigstens einem Leuchtmittel, und mit wenigstens einer Schalteinrichtung, welche das Leuchtmittel schaltet.

Bauwerke ab einer gewissen Höhe müssen je nach Standort und Behördenauflage mit einer sog. Nachtkennzeichnung bzw. Flugbefeuerungseinrichtung zur Flugsicherung ausgestattet werden. Die Nachtkennzeichnung besteht bei einer Gesamthöhe (Rotorblatt in 12.00 Uhr Position) unter 100 m aus einem sog. Hindemisfeuer, während bei einer Gesamthöhe über 100 m ein sog. Gefahrenfeuer notwendig ist.

Eine Hindemisbefeuerung besteht üblicherweise aus zwei Leuchtmitteln (zwei Leuchtkörpern), die nachts permanent leuchten, während das Gefahrenfeuer zwei Blitzleuchten (und zwei Reserveleuchten) aufweist, die Im vorgegebenen Rhythmus abwechselnd leuchten. Die Leuchtstärke eines Gefahrenfeuers ist um ein Vielfaches stärker als die Leuchtstärke eines Hindernisfeuers. Je nach Vorgabe muss ebenfalls eine Notstromversorgung vorgesehen werden.

WO 97/29320 zeigt eine Flugbefeuerungseinrichtung für eine Windenergieanlage mit einem Behälter, einer Vielzahl von Leuchten, einer schalteinrichtung zum Steuern der Leuchten, einem Dämmerungsschalter zum Beeinflussen der Schalteinrichtung in Abhängigkeit der Umgebungseinheit und einem Energiespeicher zur Stromversorgung der Einrichtung.

Aufgabe der Erfindung ist es, eine Flugbefeuerungselnrichtung von Windenergleanlagen zu verbessern und insbesondere deren Betrieb so effektiv wie möglich zu gestalten.

Erfindungsgemäß wird eine transportable Flugbefeuerungseinrichtung vorgeschlagen, welche vorzugsweise über die folgenden Merkmale verfügt, die allein oder kumulativ ausgestaltet sein können.

Zum ersten ist es sinnvoll, die Hindemisbefeuerung wie aber auch die Gefahrenbefeuerung erst dann zu aktivieren, wenn die gesamte Umgebung einen bestimmten Helligkeitswert angenommen hat. Ein solcher Helligkeitswert lässt sich durch einen Dämmerungsschalter feststellen, der auf einen vorbestimmten Helligkeitswert eingestellt wird und die Flugbefeuerung wird aktiviert, wenn ein bestimmter Helligkeitswert erreicht (unterschritten) wird.

Mit einem solchen Dämmerungsschalter lässt sich das unnötige Einschalten der Flugbefeuerung vermeiden, so dass die gesamte Lebensdauer der Leuchtmittel verlängert wird, wobei immer noch eine ausreichende Sicherheit gewährleistet wird.

Ferner kann die Windenergieanlage mit einem Sichtweitenmessgerät ausgestattet ist. Mit Hilfe dieses Messgerätes lässt sich die Sichtweite erfassen, was insbesondere bei Nebel oder anderen ungünstigen Wetterlagen (starker Regen) sinnvoll ist. Wird mittels des Sichtweitenmessgerätes das Unterschreiten einer bestimmten Sichtweite (die kritische Sichtweite kann eingestellt werden) festgestellt, wird ebenfalls die Flugbefeuerung aktiviert, so dass stets eine ausreichende Sauwerkssicherheit gegeben ist.

Werden mehrere Windenergieanlagen zusammen aufgestellt, was regelmäßig in Windparks der Fall ist, und müssen diese Windenergieanlagen aufgrund ihrer großen Höhe mit einer Gefahrenbefeuerung ausgestattet werden, ist es für den Flug- und Autoverkehr oftmals sehr störend/irritierend, wenn die Gefahrenfeuer an jeder einzelnen Windenergieanlage zu unterschiedlichen Zeiten aufbiltzen (d. h. also eingeschaltet bzw. ausgeschaltet werden). Hierzu wird eine Synchronisationseinrichtung vorgesehen, mittels der die Blitzleuchten derart synchronisiert werden, dass sämtliche Blitzleuchten aller Windenergieanlagen eines Windparks zur gleichen Zeit aufblitzen (d. h. also an- bzw. ausgeschaltet werden). Die Synchronisation kann hierbei über Funk- und/oder Datensignale erfolgen und die Synchronisationseinrichtung kann aus einer Datenverarbeitungseinrichtung bestehen, die gekoppelt mit einem Uhrwerk die Anschalt- bzw. Ausschaltsignale der Blitzleuchten genenert, so dass der Zweck erreicht wird.

Eine Flugbefeuerungseinrichtung muss bei einer Windenergieanlage so sicher ausgelegt sein, dass sie ihre Funktionstüchtigkeit auch noch dann aufweist, wenn die gesamte Windenergieanlage vom elektrischen Netz abgenommen ist bzw. der Rotor der Windenergieanlage stillsteht. Deshalb wird eine Notstromversorgungseinrichtung für eine Windenergieanlage und deren Flugbefeuerung vorgeschlagen, so dass zumindest für eine Nacht die Flugbefeuerung aufrechterhalten werden kann. Hierzu ist bei der Windenergieanlage ein (bevorzugt klimatisierter) Schaltschrank vorgesehen, in dem die gesamten Steuerungseinrichtungen für die Flugbefeuerung angeordnet sind und zudem auch noch Batterien bzw. Akkumulatoren, die die notwendige Energie für die Flugbefeuerung liefern. Diese Batterien bzw. Akkumulatoren sind bevorzugt absolut wartungsfrei.

Für mehrere Windenergieanlagen eines Windparks kann auch ein zentraler Schaltschrank für Notstrom und Steuerung der Flugbefeuerung vorgesehen werden.

Die Flugbefeuerungseinrichtung steuert nicht nur die jeweilige Flugbefeuerung (Hindemisbefeuerung, Gefahrenfeuer), sondern überwacht auch noch die Störung verschiedener Einrichtungen wie den Ausfall der Versorgungsspannung, den Ausfall einer Lampe, Störung des Dämmerungsschalters, Störung von Batterien bzw. des Ladegerätes zum Aufladen der Akkumulatoren, Störung der Klimatisierung des Schaitschranks, den Ausfall der Sichtweitenmessung (falls diese vorhanden ist) sowie die Störung der Synchronisierung (nur bei Gefahrenbefeuerung).

Wird eine solche Störmeldung festgestellt, wird diese automatisch über die Anbindung an die Anlagesteuerung an eine Zentrale weitergeleitet. Die Übermittlung der Störmeldung an die Zentrale kann mittels Fax, SMS oder auch E-Mail erfolgen.

Die Gefahrenbefeuerung besteht aus je zwei Haupt- und zwei Reserveleuchten. Die Lichtstärke der Blitze beträgt mehr als 1600 od/Blitz. Die Blitze befinden sich in einem Gehäuse der Schutzart IP 67. Als Leuchtmittel ist hier ein Xenonblitzrohr mit einer Nenniebensdauer von ca. 2.000.000 Blitzen (entspricht ca. 12 Monaten).

Fällt eine Hauptblitzleuchte aus, wird automatisch auf das redundante zweite System (Reserveleuchte) umgeschaltet und eine Störmeldung an die Zentrale abgesetzt.

Die Hindernisbefeuerung besteht aus zwei Hindemisleuchten und ist bevorzugt mit Leuchtmitteln aus LEDs ausgeführt. Die Leuchtmittel befinden sich in einem Gehäuse der Schutzart IP 67. Da die Betriebsdauer er oben beschriebenen Hindernisleuchten erfasst wird, Ist bei diesem Aufbau kein redundantes System notwendig. Durch den Einsatz von LED-Leuchtmitteln ist der Stromverbrauch sehr gering und die Lebensdauer mit mindestens 10 Jahren sehr hoch.

Ein weiterer Aspekt der Erfindung befasst sich damit, dass insbesondere bei Baustellen, z. B. für Windenergieanlagen, auf denen der Turm der Windenergieanlage bereits errichtet Ist, das Maschinenhaus, der Rotor, der Generator und die elektrischen Installationen jedoch noch nicht vorhanden sind, eine Augbefeuerungselnrichtung fehlt, obwohl der Turm durchaus ein Flughindernis bzw. einen Gefahrenpunkt bildet.

Zur Lösung dieses Problems wird erfindungsgemäß eine Flugbefeuerungseinrichtung vorgeschlagen, welche über eine transportable Energieversorgung verfügt. Durch eine solche autarke, von einer festen Installation unabhängige, Energieversorgung kann jedes Bauwerk bei Bedarf mit einer Flugbefeuerungseinrichtung ausgestattet werden. Dies ermöglicht die im Interesse der Flugsicherheit erforderliche Kennzeichnung dieses Bauwerkes auch dann, wenn eine Stromversorgung dieses Bauwerkes (noch) nicht hergestellt ist,

In bevorzugten Weiterbildungen dieser Erfindung kann eine erfindungsgemäße Flugbefeuerungseinrichtung über folgende Merkmale verfügen. die allein oder in Kombinationen ausgebildet sein können.

Durch Verwendung von Dämmerunssschaltern kann die mögliche Betriebszeit verlängert werden.

Als Energiespeicher kommen Akkumulatoren und/oder Kondensatoren z. B. vom Typ "Ultracap" in Betracht. Zur Ergänzung des Energievorrates können z. B. fotovoltaische Module und/oder ein transportabler Generator mit einem Rotor zur Umwandlung von Windenergie in elektrische Energie vorgesehen sein. Sowohl das Fotovoltaik-Modul wie auch der Generator liefern zwar nur eine begrenzte Energiemenge, diese kann jedoch z. B. über eine geeignete Steuerung wie einen Laderegler kontinuierlich in die Energiespeicher eingespeist und bei Bedarf entnommen werden. So ist bei geeigneter Auslegung der Energiespeicher theoretisch ein zeitlich unbegrenzter Betrieb möglich.

Um die Lebensdauer von Akkumulatoren zu erhöhen und deren Tiefst-Entladung zu vermeiden, kann bevorzugt ein sogenannter Akkuwächter vorgesehen sein, der bei Erreichen einer vorgebbaren unteren Klemmenspannung des/der Akkus die Energieentnahme unterbindet.

Neben der Überwachung der einzelnen Komponenten kann eine Einrichtung vorgesehen sein, welche im Falle einer Störung eine Störungsmeldung z. B. zu einer vorgegebenen Zentrale absetzt. Eine solche Einrichtung umfasst bevorzugt ein GSM-Modul, das z. B. über eine Funkverbindung eine Kurzmitteilung (SMS) absetzen kann, die den Empfänger auf die Störung hinweist.

Darüber hinaus kann ein Transportbehälter vorgesehen sein, in dem die einzelnen Komponenten der Flugbefeuerungseinrichtung, wie Akkumulatoren, Schalteinrichtung, GSM-Modul, Laderegler, Akkuwächter, etc. untergebracht sind. Dabei können die Leuchten bevorzugt auf dem Deckel dieser Transportvorrichtung angebracht sein, so dass die gesamte erfindungsgemäße Flugbefeuerungseinrichtung als eine Einheit handhabbar ist.

Besonders bevorzugt sind in dem Transportbehälter weiterhin Halter für die im Betrieb notwendig außerhalb des Behälters angeordneten Teile der Flugbefeuerungseinrichtung, wie z. B. das Fotovoltaik-Modul und/oder den Generator vorgesehen, so dass diese für den Transport ebenfalls in dem Transportbehälter untergebracht werden und daher nicht verloren gehen können.

Dabei können der Generator und/oder das Fotovoltaik-Modul während des Betriebes an dem Transportbehälter befestigt sein bzw. von diesem abgesetzt an günstigen Stellen an der Spitze des Turmes befestigt sein. Diese Befestigung kann wiederum über geeignete Halter (Flansche) erfolgen.

Sofern der Transportbehälter eine ausreichende Höhe aufweist, können auch die Leuchten während des Transportes in diesem Behälter gestaut werden, so dass sie einerseits nicht verloren gehen können und andererseits auch vor Beschädigungen geschützt sind. Dazu ist der Deckel des Behälters erfindungsgemäß derart ausgebildet, dass er sowohl mit den daran angebrachten Leuchten aufwärts weisend, wie auch mit den daran angebrachten Leuchten abwärts weisend den Behälter dicht verschließt und so dessen Innenraum zuverlässig vor Witterungseinflüssen schützt.

Um eine einfache Handhabung zu verwirklichen, wird die elektrische Verbindung zwischen der Schalteinrichtung bzw. der Umschaltvorrichtung bevorzugt durch eine lösbare Kabelverbindung hergestellt. Dabei ist die Kabelverbindung bevorzugt an der Schalteinrichtung mit einem oder mehreren Verbindern lösbar.

Die obere Abdeckung des Transportbehälters, an welcher die Leuchten vorgesehen sind, weist ein Fach auf, weiches das Verbindungskabel zwischen den Leuchten und der Schalteinrichtung aufnimmt. Dieses Fach kann eine Abdeckung aufweisen, welche das Fach in der Transportposition des Behälterdeckels mit in den Behälter hinein ragenden Leuchten verschließt.

Zur Synchronisierung mehrerer Flugbefeuerungseinrichtungen können diese über einen Funkempfänger verfügen, der Signale eines zentralen Senders wie des DCF-Senders der Physikalisch-Technischen Bundesanstalt empfängt und zu vorgegebenen Zeitpunkten, die sich aus dem Funksignal ableiten lassen, bestimmte Schaltvorgänge wie Blinkimpulse für die Leuchten, auslöst. Alternativ zu einem DCF- Empfänger können natürlich auch mehrere räumlich benachbarte Flugbefeuerungseinrichtungen über Funksignale einer vorgebbaren Sendestation wie z. B. einer Master-Anlage gesteuert werden.

In den Figuren sind Ausführungsbeispiele der Erfindung dargestellt. Dabei zeigen
- Fig. 1: die Frontal- bzw. Seitenansicht einer Windenergieanlage mit einem Hin- dernis- oder Gefahrenfeuer gemäß dem Stand der Technik;
- Fig. 2: eine erste Ausführungsform einer erfindungsgemäßen transportablen Energiequelle zur Energieversorgung einer Flugbefeuerungseinrichtung;
- Fig. 3: eine alternative Ausführungsform einer erfindungsgemäßen transportablen Energiequelle; und
- Fig. 4: eine Detailansicht einer Abdeckung eines Transportbehälters.

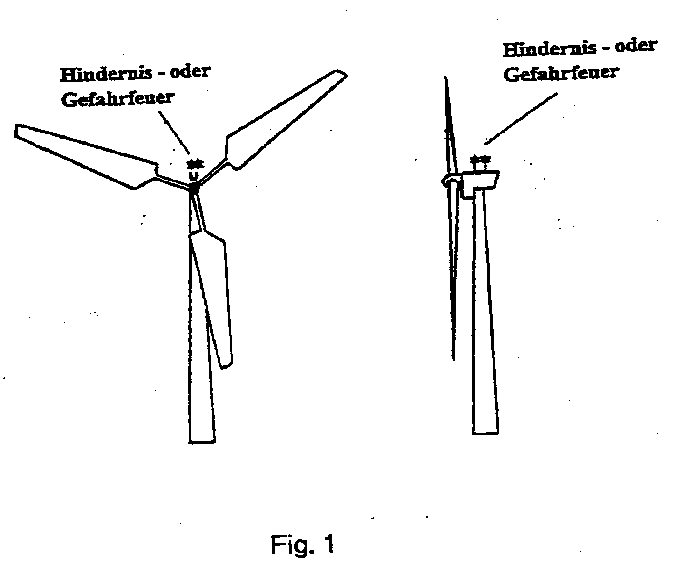

Fig. 1 zeigt in einer Skizze die Frontal- bzw. Seitenansicht einer Windenergieanlage mit einem Hindernis- oder Gefahrenfeuer gemäß dem Stand der Technik. Dieses Hindernis- und/oder Gefahrenfeuer ist auf der Gondel angeordnet.

Bei der Ausbildung als Gefahrenfeuer blinken diese 20 bis 60 Mal pro Minute. Ihre Einschaltzeit während der Blinkphase ist länger als die Dunkelphase. Es können auch rote Blitzfeuer eingesetzt werden. Die Blinkfrequenz soll zwischen 20 und 60 Mal pro Minute liegen. Im Übrigen hat ein Hindernis- oder Gefahrenfeuer den Richtlinien für die Kennzeichnung von Luftfahrthindernissen des Bundesministeriums für Verkehr, Bau- und Wohnungswesen vom 22. Dezember 1999 (Gefahrfeuerverordnung) zu genügen.

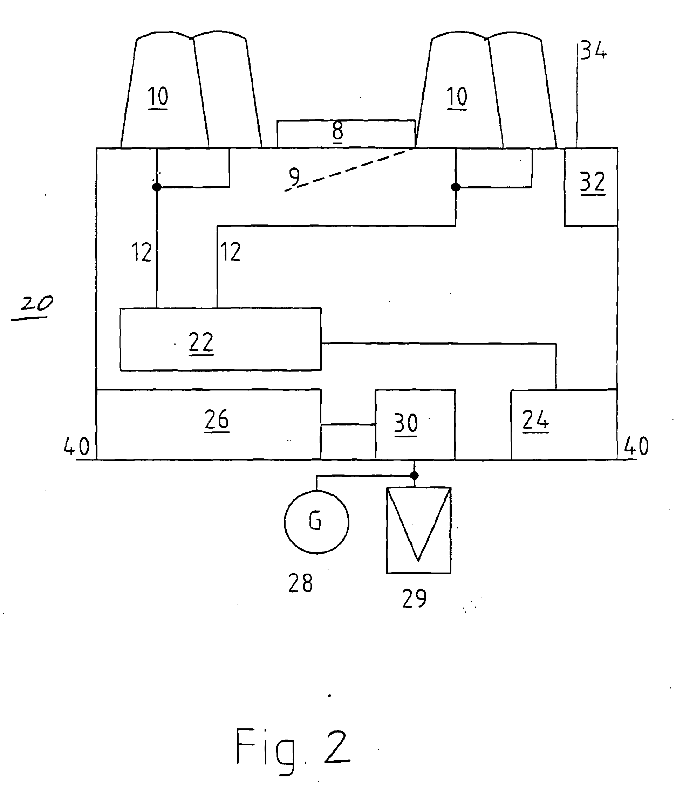

Figur 2 zeigt einen Transportbehälter 20 mit einer Schalteinrichtung 22, in welche eine Leuchtenüberwachung integriert sein kann. Diese Schalteinrichtung 22 steuert Leuchten 10 in einer vorgebbaren Weise an, die z. B. durch eine feste Verdrahtung oder durch eine Mikroprozessorsteuerung vorgegeben sein kann. Weiterhin kann die Schalteinrichtung durch externe Signale beeinflusst werden. Diese können von einem Dämmerungsschalter 24 stammen.

Ein solcher Dämmerungsschalter 24 ist vorgesehen, um abhängig von der Umgebungshelligkeit die erfindungsgemäße Flugbefeuerungseinrichtung zu beeinflussen. Diese Beeinflussung kann das Ein- bzw. Ausschalten der Flugbefeuerungseinrichtung bei einer bestimmten Umgebungshelligkeit sein.

Zur Stromversorgung der gesamten Flugbefeuerungseinrichtung ist ein Energiespeicher 26 vorgesehen, der aus Akkumulatoren und/oder Kondensatoren oder ähnlichem gebildet sein kann. Dieser Energiespeicher 26 kann durch einen Generator zum Umwandeln von Windenergie in elektrische Energie 28 und/oder ein Fotovoltaik-Modul 29 gespeist werden, die über einen Laderegler 30 mit dem Energiespeicher 26 verbunden sind. Dieser Laderegler 30 bewirkt eine Ladung der Akkumulatoren bzw. Kondensatoren mit geeigneten Spannungen und Strömen.

Der Generator 28 und das Fotovoltaik-Modul 29 weisen derartige Abmessungen auf, dass sie für den Transport der Flugbefeuerungseinrichtung in dem Transportbehälter 20 untergebracht werden können. Dadurch sind sie während des Transportes vor Schäden geschützt und können nicht verloren gehen, so dass stets alle Komponenten der Flugbefeuerungseinrichtung vorhanden sind.

In dieser Figur 2 sind auf dem Transportbehälter 20 je zwei Leuchtenpaare 10 angebracht, von denen eines das Haupt-Leuchtenpaar und das andere das Reserve-Leuchtenpaar ist. Weiterhin befindet sich auf dem Transportbehälter 20 eine Antenne 34, die mit einem in dem Behälter angeordneten GSM-Modul 32 verbunden ist. Über dieses GSM-Modul 32 können z. B, im Falle von Störungen entsprechende Störungsmeldungen zu vorgegebenen Empfängern abgesetzt werden.

Um eine Befestigung der erfindungsgemäßen Flugbefeuerungseinrichtung an dem Turm zu ermöglichen, sind Befestigungsflansche 40 an dem Transportbehälter 20 vorgesehen, durch die er mit Schrauben am Turm befestigt werden kann.

Die elektrische Verbindung zwischen der Schalteinrichtung 22 und den Leuchten 10 wird durch Kabel 12 hergestellt. Diese Kabel 12 sind bevorzugt an der Schalteinrichtung 22 lösbar, so dass die Abdeckung des Transportbehälters 20 mit den daran angebrachten Leuchten 10 einschließlich der elektrischen Verbindungen vollständig von dem Transportbehälter 20 gelöst werden kann.

Zum Transport der Flugbefeuerungseinrichtung kann der Deckel mit den daran angebrachten Leuchten 10 dann so auf den Transportbehälter 20 ausgesetzt werden, dass die Leuchten 10 sich im Inneren des Transportbehälters 20 befinden. In dieser Einbausituation des Deckels befinden sich nunmehr die Kabel 12 an der Außenseite des Transportbehälters 20. Um die Kabel 12 zu schützen, können diese in einem Fach 8 verstaut werden, das mit einem Deckel 9 verschließbar ist.

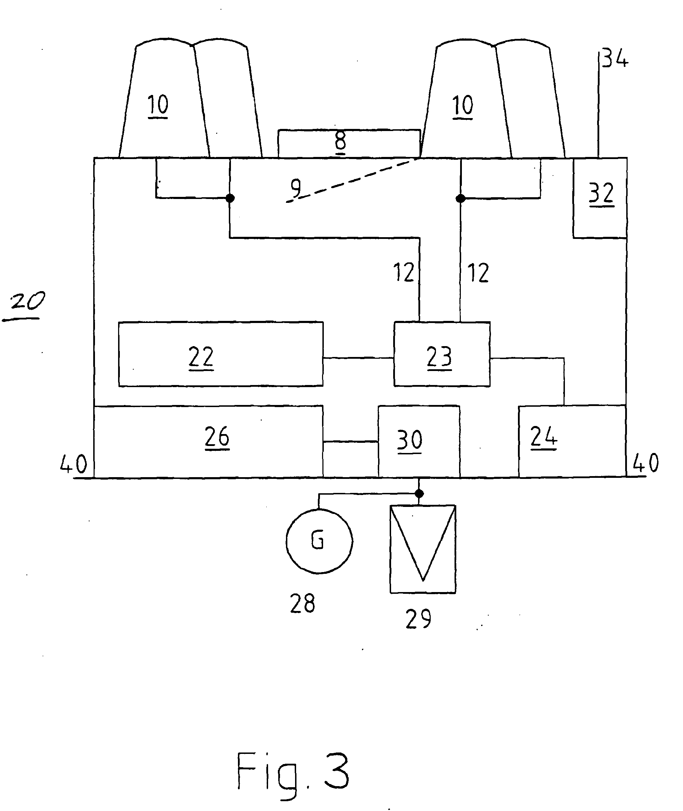

Figur 3 entspricht im Wesentlichen Figur 2. Der Unterschied besteht darin, dass hier eine Umschaltvorrichtung 23 vorgesehen ist. Diese Umschaltvorrichtung 23 empfängt die Signale zur Ansteuerung der Leuchten 10 von der Schalteinrichtung 22 und leitet sie weiter zu den Leuchten 10. Weiterhin wird die Umschalteinrichtung 23 von dem Dämmerungsschalter 24 beeinflusst. Dabei wird die Umschalteinrichtung so gesteuert, dass abhängig von der Umgebungshelligkeit jeweils eines der beiden Leuchtenpaare 10 mit den Signalen der Schalteinrichtung 22 beaufschlagt wird.

Wenn verschiedenfarbige Leuchten 10 vorgesehen sind, z. B. rote Leuchten für die Nacht-Befeuerung und weiße Leuchten für die Tag-Befeuerung, kann der Dämmerungsschalter 24 alternativ dazu verwendet werden, die Umschaltung zwischen Tag- und Nacht-Befeuerung abhängig von der Umgebungshelligkeit vorzunehmen. Natürlich kann die für die Umschaltung zwischen Tag-Befeuerung und Nacht-Befeuerung erforderliche Umschaltvorrichtung in die Schalteinrichtung 22 integriert sein.

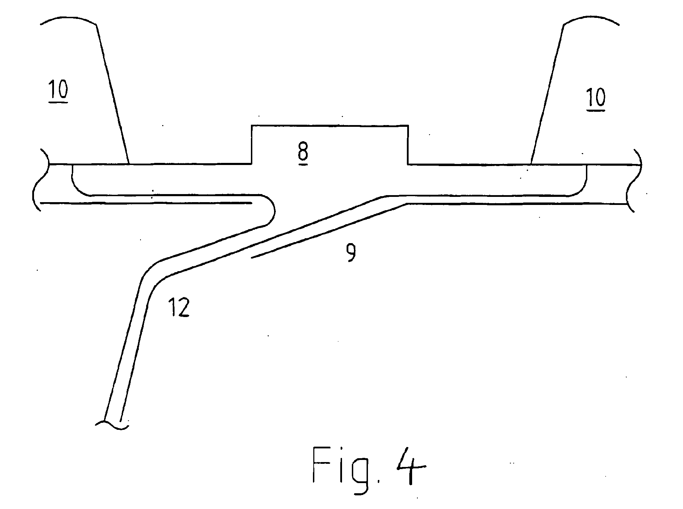

Figur 4 zeigt eine Detaildarstellung einer möglichen Kabelführung. Die Kabel 12 sind an den Leuchten 10 angebracht, Im Betrieb ist die in den Transportbehälter hinein weisende Klappe 9 offen und die Kabel 12 können mit der Schalteinrichtung 22 oder der Umschaltvorrichtung 23 verbunden werden.

Für den Transport der Flugbefeuerung wird die Abdeckung so gedreht, dass die Leuchten 10 abwärts (in den Transportbehälter hinein) weisen. Die jetzt an der Oberseite befindlichen Kabel 12 sind dann ungeschützt, soweit sie nicht in dem Fach 8 aufgenommen sind. Um eine Beschädigung der Kabel 12 zu verhindern, können sie innerhalb eines zweischaligen Deckels verlegt sein, und im Bereich der Abdeckung für das Fach 9 aus dem Deckel heraustreten und zu der Schalteinrichtung 22 bzw. der Umschaltvorrichtung 23 geführt werden.

Für den Transport können die Kabel 12 in dem Fach 8 verstaut werden. Dabei kann die Abdeckung 9, die sich während des Transportes an der Außenseite das Transportbehälters befindet, das Fach 8 sowie den Innenraum des zweischaligen Deckels vor Verunreinigungen und Beschädigungen schützen.

## Patentansprüche

1. Transportable Flugbefeuerungseinrichtung für eine Windenergieanlage, mit einem Transportbehälter (20),
einer Vielzahl von Leuchten (10),
einer Schalteinrichtung (22) zum Steuern der Leuchten (10),
einem Dämmerungsschalter (24) zum Beeinflussen der Schalteinrichtung (22) in Abhängigkeit der Umgebungshelligkeit,
einem Energiespeicher (26) zur Stromversorgung der Flugbefeuerungseinrichtung, und
einem Deckel für den Transportbehälter, wobei die Leuchten (10) derart an dem Deckel angebracht sind, dass der Deckel sowohl mit aufwärts weisenden Leuchten als auch mit abwärts weisenden Leuchten den Transportbehälter dicht verschließt.

2. Transportable Flugbefeuerungseinrichtung nach Anspruch 1, ferner mit
einer Umschaltvorrichtung (23) zum Empfangen von Signalen zur Ansteuerung der Leuchten von der Schalteinrichtung und zum Weiterleiten dieser Signale zu den Leuchten (10),
wobei die Umschalteinrichtung (23) von dem Dämmerungsschalter (24) beeinflusst wird und wobei die Umschalteinrichtung (23) derart gesteuert wird, dass in Abhängigkeit von der Umgebungshelligkeit eines der beiden Leuchtenpaare (10) mit Signalen der Schalteinrichtung (22) beaufschlagt wird.

3. Flugbefeuerungseinrichtung nach einem der Ansprüche 1 oder 2, wobei
die Leuchten als rote Leuchten für die Nachtbefeuerung und weiße Leuchten für die Tagbefeuerung ausgestaltet sind,
wobei der Dämmerungsschalter (24) dazu ausgestaltet ist, die Umschaltung zwischen einer Tag- und Nachtbefeuerung in Abhängigkeit von der Umgebungshelligkeit vorzunehmen.

## Claims

1. A transportable flight navigation device for a wind power installation, with a transportation container (20),
a plurality of lights (10),
a switching device (22) for controlling the lights (10),
a twilight switch (24) for influencing the switching device (22) in a manner dependent upon the ambient brightness,
an energy store (26) for supplying current to the flight navigation device, and
a cover for the transportation container, wherein the lights (10) are attached to the cover in such a way that the cover tightly closes the transportation container both with upwardly directed lights and with downwardly directed lights.

2. A transportable flight navigation device according to Claim 1, further with a change-over switching apparatus (23) for receiving signals for actuating the lights from the switching device and for passing the said signals on to the lights (10), wherein the change-over switching device (23) is influenced by the twilight switch (24) and wherein the change-over switching device (23) is controlled in such a way that one of the two pairs of lights (10) is acted upon with signals of the switching device (22) in a manner dependent upon the ambient brightness.

3. A transportable flight navigation device according to one of Claims 1 or 2, wherein the lights are designed in the form of red lights for night-time navigation lighting and white lights for daytime navigation lighting,
wherein the twilight switch (24) is designed in order to carry out the switching over between daytime and night-time navigation lighting in a manner dependent upon the ambient brightness.

## Revendications

1. Dispositif de balisage pour aéronefs transportable, destiné à une éolienne, comprenant
une caisse de transport (20),
une pluralité de lumières (10),
un dispositif d'enclenchement (22) pour commander les lumières (10),
un interrupteur crépusculaire (24) pour influencer le dispositif d'enclenchement (22) en fonction de la luminosité ambiante,
un accumulateur d'énergie (26) pour l'alimentation électrique du dispositif de balisage pour aéronefs, et
un couvercle pour la caisse de transport, dans lequel les lumières (10) sont placées sur le couvercle de telle sorte que le couvercle ferme hermétiquement la caisse de transport aussi bien lorsque les lumières sont orientées vers le haut que lorsque les lumières sont orientées vers le bas.

2. Dispositif de balisage pour aéronefs transportable selon la revendication 1, comprenant en outre
un dispositif de commutation (23) pour recevoir des signaux pour piloter les lumières du dispositif d'enclenchement et pour transmettre ces signaux aux lumières (10),
dans lequel le dispositif de commutation (23) est influencé par l'interrupteur crépusculaire (24), et dans lequel le dispositif de commutation (23) est commandé de telle sorte qu'en fonction de la luminosité ambiante l'une des deux paires de lumières (10) est alimentée par des signaux du dispositif d'enclenchement (22).

3. Dispositif de balisage pour aéronefs selon l'une des revendications 1 ou 2, dans lequel
les lumières sont configurées comme des lumières rouges pour le balisage de nuit et des lumières blanches pour le balisage de jour,
dans lequel l'interrupteur crépusculaire (24) est configuré pour procéder à la commutation entre le balisage de jour et de nuit en fonction de la luminosité ambiante.
